# EUROPEAN PATENT APPLICATION

(11) **EP 2 053 880 A1**
(43) Date of publication of application: **29.04.2009**
(21) Application number: 07021032.3
(22) Date of filing: 26.10.2007
(51) Int. Cl.: H04W 4/00

(54) **Methods and system to enable media independent handover for moving networks and corresponding MIH protocol**

(71) Applicant: Nokia Siemens Networks Oy, 02610 Espoo (FI)
(72) Inventor: Pittmann, Frank, 12099 Berlin (DE)
(74) Representative: Bruglachner, Thomas E.

(57) **Abstract**

The present invention refers to methods and a system to enable media independent handover for moving networks as well as a corresponding MIH protocol, comprising the steps indicating (IC1)a request from an external user equipment (UE3) to a root mobile router (rMR) of a moving network for joining said moving network, decision making (EC1) in the root mobile router (rMR) to accept said external user equipment (UE3) as a new member of said moving network, sending a registration query (EC2) including an identification for the new member (UE3) to a decision point (DP) of a serving network, decision making (EC3) in said decision point, sending (EC4) a decision result for the new member to said root mobile router, and accepting or rejecting (IC2) said external user equipment as new member of said moving network on the basis of the decision result.

## Description

The present invention relates generally to methods and a system to enable media independent handover for moving networks and a corresponding MIH protocol and in particular to methods and a system for enabling the handover for moving networks being implemented on a IEEE 802.21 protocol.

Media independent handover (MIH) for end user devices is standardized by e.g. IEEE 802.21. This standard proposes a standardized mechanism to optimize mobility in terms of reducing the handover delay and packet loss in heterogeneous access network environment by means of a media independent handover (MIH) communication between a network and a client. In this respect a client is considered to constitute a mobile node or equivalently as user equipment (UE). Moreover it sates to be independent of the chosen mobility management (MM) protocol, and due to the mentioned communication that mobility process may be network-controlled.

IEEE 802.21 as well as 3GPP SAE/LTE standardization currently concentrate on terminal mobility, i.e. the mobility of a mobile node (MN) or a user equipment (UE), but future telecommunication networks may support also other types of mobility endpoints like moving networks (e.g. vehicular, train or personal area networks (PANs)).

Moreover, there exist already protocols like network mobility (NEMO) basic support protocol (IETF RFC 3963 Tefarapali, et al.: "Network mobility (NEMO) basic support protocol", January 2005) and its extensions for enabling these types of mobility endpoints (i.e. moving networks) to attach to different points of network infrastructure while maintaining service continuity.

Thus, since IEEE 802.21 is not standardized to optimize mobility of or even to deal at all with moving networks and, hence, lacks efficient means to optimize the handover process for the mentioned types of mobility endpoints (i.e. moving networks) since it does not consider specific properties of these endpoints there is a need to provide methods and a system to enable media independent handover for moving networks as well as a corresponding extended MIH protocol.

According to the present invention there is provided a method to enable media independent handover for moving networks comprising the steps indicating a request from an external user equipment to a root mobile router of a moving network for joining said moving network, decision making in the root mobile router to accept said external user equipment as a new member of said moving network, sending a registration query including an identification for the new member from said root mobile router to a decision point of a serving network, decision making in said decision point, sending a decision result for the new member to said root mobile router and accepting or rejecting said external user equipment as new member of said moving network on the basis of the decision result.

According to a further embodiment of the present invention there is provided a method to enable media independent handover for moving networks comprising the steps decision making in a decision point of a serving network to eliminate at least one user equipment from the moving network, sending an elimination request including identification of concerned user equipment from said decision point to a root mobile router of said moving network, removing said at least one identified user equipment from said moving network, and sending an elimination acknowledgement from said root mobile router to said decision point of the successful elimination.

Moreover, according to a further embodiment a root mobile router sends a registration verification indicating a successful incorporation of the new member in the moving network, a decision verification is made in the decision point and the result of the decision verification is sent to the root mobile router.

Thus, by incorporation three additional MIH commands registration query, registration verification and elimination it is possible to extend a media independent handover protocol like IEEE 802.21 to support also a handover from a user equipment into a moving network as well as a elimination of a member of the moving network.

According to a further embodiment of the present invention there is provided a system to enable media independent handover for moving networks comprising a decision point in a serving network, and a root mobile router in a moving network, wherein said root mobile router realizes an internal communication in said moving network indicating a request from an external user equipment to said root mobile router for joining said moving network, said root mobile router makes a decision to accept said external user equipment as a new member of said moving network, said root mobile router sends a registration query including an identification for the new member to said decision point, said decision point makes a decision for the acceptance of the new member, said decision point sends a decision result for the new member to said root mobile router, and said root mobile router accepts or rejects said external user equipment as new member of said moving network on the basis of the decision result.

According to a further embodiment of the present invention there is provided a media independent handover protocol comprising the further MIH-commands registration query for initiating a registration of a joining user equipment to a moving network, registration verification for verifying said registration and elimination for eliminating a user equipment from a moving network.

According to a further embodiment of the present invention there is provided a media independent handover protocol comprising the steps detecting a media independent handover command including at least one parameter each including a data type having a plurality of bits; determining a mobility data type defining mobility management protocols supported by a mobile node; and evaluating the plurality of bits of said determined data type, wherein said mobile node is considered as root mobile router of a moving network, if the evaluated bits define at least one network mobility protocol.

According to a further embodiment there is provided a method to enable media independent handover for moving networks, comprising the steps: detecting a media independent handover command including at least on parameter each including a data type having a plurality of bits; determining an IP configuration parameter defining IP configuration methods for a mobile node; and evaluating the further parameters of said detected media independent handover command, wherein said determined IP configuration parameter defines IP configuration methods of egress interfaces for a root mobile router of a moving network, if the evaluated parameters include an additional IP configuration ingress parameter defining an IP configuration method of ingress interfaces of a connected moving network.

Thus, by adding new parameters of already existing MIH-commands and a new interpretation of the data submitted by these parameters or MIH-commands it is also possible to realize a handover of moving networks in already existing MIH-protocols such as IEEE 802.21.

The foregoing has outlined rather broadly the features and technical advantages of embodiments of the present invention in order that a detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

For a more complete understanding of the present invention and the advantages thereof, reference is now made to the following descriptions taken in conjunction with the accompanying drawings, in which:
Figure 1 illustrates a simplified block diagram of a telecommunication network architecture enabling handover into or for moving networks;
Figure 2 shows a simplified block diagram illustrating the placement of a media independent handover function within a mobility management protocol stack;
Figure 3 shows a simplified status diagram illustrating a mobile-initiated and network-controlled process for joining a moving network;
Figure 4 shows a simplified status diagram illustrating an elimination of a user equipment from a moving network initiated by a serving network;
Figures 5A and 5B show a simplified status diagram illustrating a portion of a mobile-initiated handover procedure for a moving network;
Figures 6A and 6B show a simplified status diagram illustrating a portion of a handover procedure for a moving network which is initiated by a serving network.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely optimized media independent handover for moving networks according to IEEE 802.21. The invention may also be applied, however, to other media independent handover protocols where an optimized handling of moving networks like train networks, vehicular networks or personal area networks (PAN) is desired.

For the following description it is particularly referred to IEEE 802.21, which is herewith incorporated by reference.

The technical problem arises from the above outlined reasoning in the sense that IEEE 802.21 is not standardized to optimize mobility of or even to deal at all with moving networks and, hence, lacks efficient means to optimize the handover process for the mentioned types of mobility endpoints (i.e. moving networks) since it does not consider specific properties of these endpoints.

The network-control is one main property of 3GPP networks. The present invention focuses on enabling MIH (media independent handover) services to control moving networks constituting nodes, hence, optimizing the mobility process for the foreseen mobility endpoints. The specified solution utilizes a property that arises from the fact that moving networks per se consist out of several constituting nodes, i.e. mobile nodes (MN) or user equipments (UE), that are basically responsible, e.g. for (radio) network resource consumption. According to the present invention a total number of constituting nodes of a moving network may be controlled from the network side by means of a modified conventional MIH-protocol such as IEEE 802.21 independent of any handover initiation, which means pro-actively in advance.

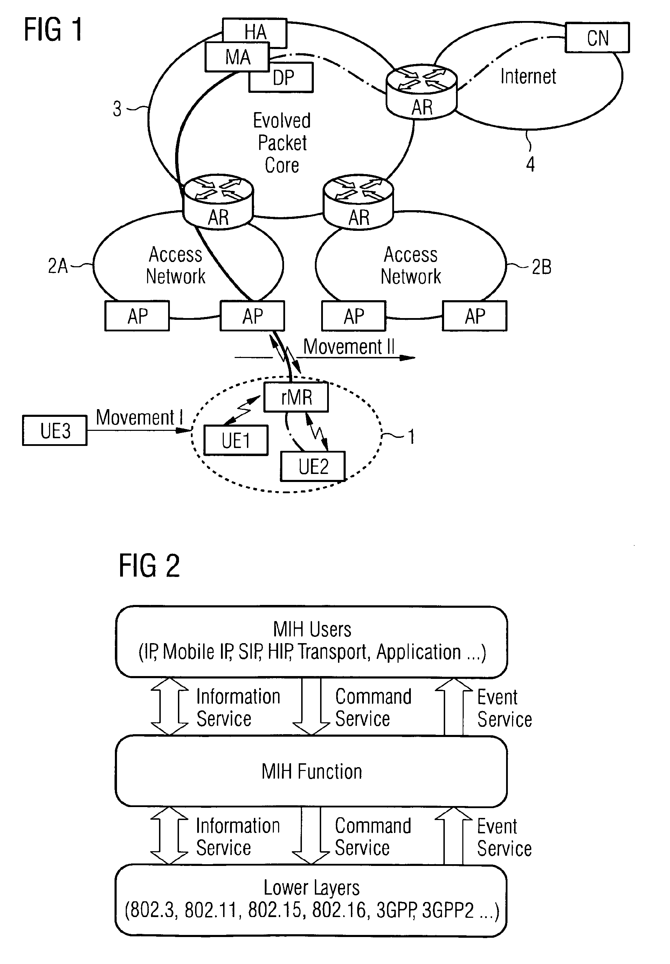

Figure 1 illustrates a simplified block diagram of a network architecture according to the present invention. According to Figure 1 there exists a core network 3 comprising an evolved packet core (EPC). In a mobility anchor MA of this core network 3 binding cash and routing tables are realized. Furthermore, the core network 3 may include a home agent HA and a decision point DP which may be realized in the mobility anchor MA or at any other point within the core network 3. The core network 3 may include a plurality of access routers AR in order to link further networks. These further networks may be access networks 2A and 2B realizing e.g. a wireless access network for a user equipment or a moving network 1. The moving network includes at least one user equipment UE1 and UE2 which is linked to a root mobile router rMR of the moving network 1 which is connected to an access point AP of said access networks 2A or 2B.

Moreover, an IP based network like the internet 4 may be linked via a further access router AR to the core network 3 including a correspondent node CN. The IP-based network 4 may include a bi-directional tunnel according to NEMO (Network Mobility protocol) and its extensions for realizing a communication path between e.g. user equipment UE2 of the moving network 1 and the corresponding node CN (see dashed line).

The present invention now enables media independent handover for moving networks according to two different movements, i.e. movement I and movement II (see Figure 1).

In detail movement I constitutes a movement of an external user equipment UE3 joining the moving network 1, while the movement II constitutes a movement of the moving network 1 e.g. from the access network 2A to the access network 2B.

Thus, movement I describes a handover of a user equipment into a moving network while the movement II defines a handover of a moving network from one access network to another access network.

### Movement I

Considering dedicated user classes such as "standard" (e.g. prepaid users UE3) and "premium" (e.g. business users UE1, UE2 and root mobile router rMR). In the following it is assumed that such a classified "standard" user equipment UE3 would like to join the moving network 1. Furthermore, it is considered that the decision point DP in the core network 3 knows about e.g. load conditions in the access networks 2A and 2B, which may force the decision point DP to decide that a user classified as "standard" user is currently not allowed to join the moving network 1 that is connected to the concerned access network 2A due to overload conditions in that serving system and in potential target access systems.

The MIH (media independent handover)-protocol has to perform optimized mobility management (MM) for the moving network 1 and, therefore, needs means to support pro-actively actions that would ensure such optimized handovers. In future telecommunication networks it is required that some control function (in our scenario the decision point DP) in the core network 3 must have the means to control the constituting nodes of moving networks 1 actually independent from handover initiation, which may be potentially initiated at a later point of time. One benefit gain through that pro-active control is that the afterwards initiated handover process is optimized in terms of a shortened handover time since some necessary actions are already done. The present invention, therefore, proposes an extension of an e.g. already existing MIH-protocol and of the MIHF functionality to realize this control. In particular, the present invention proposes an integrated solution based on IEEE 802.21 to enforce a network to accept or reject a request of an external user equipment UE3 to join a moving network 1 and to eliminate user equipment from a moving network that are already connected to that moving network 1.

Since underlying mechanisms such as NEMO (network mobility protocol) do not provide any mechanism to enforce the network as outlined and, since it is not beneficial for the network operators to have a solution dependent on underlying mobility protocols, the present invention provides the needed independence from these underlying mechanisms.

According to IEEE 802.21 (media independent handover (MIH) services) handover optimization between heterogeneous media is facilitated by providing link layer intelligence and network information to upper layers (so-called MIH users).

Figure 2 illustrates a simplified block diagram showing the placement of the media independent handover function MIHF within the mobility management protocol stack of a mobile node (MN) or a network. The MIHF provides services to the MIH users through a single media-independent interface (the MIH service access point) and obtains services from the lower layers through a variety of media-dependent interfaces (media-specific service access points).

The goal of IEEE 802.32 is to facilitate mobility management (MM) protocols such that following handover requirements are fulfilled:
minimize the data loss and break time without user intervention,
support applications of different tolerance characteristics, specify means of obtaining quality of service (QOS) information of the neighboring networks, etc..

The present invention includes a media independent handover function (MIHF) consisting of three basic services and corresponding service access points SAPs and primitives:
media independent event service (MIES),
media independent command service (MICS), and
media independent information service (MIIS).

Moreover, protocols such as network mobility (NEMO) basic support protocol and its extensions, as currently standardized in IETF, enable moving networks to attach to different points of a network infrastructure. The NEMO protocol is an extension of mobile IPv6 protocol and allows session continuity for every node in the moving network as the network moves. It also allows every node in the moving network to be reachable while moving around.

The root mobile router rMR, which connects the moving network 1 to the network infrastructure runs the network mobility protocol with its home agent HA. The protocol is designed so that network mobility is transparent to the nodes inside the moving network 1 which are called mobile network nodes (MNNs) or user equipment UE1 and UE2. NEMO defines also a mobile network prefix (MNP) with an IPv6 prefix delegated to a root mobile router and advertised in the moving network 1 to provide routable addresses for the nodes, i.e. user equipments in the moving network 1. A corresponding table is managed by the home agent HA so that the home agent could do appropriate packet routing.

According to Figure 2 the media independent handover function MIHF provides media independent event services (MIES), media independent command services (MICS) and media independent information service (MIIS) which optimize handovers across heterogeneous networks. To provide MIES, MICS and MIIS to its MIH users, the MIH entities need to be set up properly via some system management primitives and messages.

According to the present invention the media independent event service (MIES), the media independent information service (MIIS) and the system management are not affected. Thus, the present invention proposes to extend only the media independent command service (MICS) with three additional MIH commands, e.g.
"MIH_MN_NEMO_MN_Registration_Query",
"MIH_MN_NEMO_MN_Registration_Verification", and
"MIH_NET_NEMO_MN_Elimination"
that are specified in the following in detail.

According to the existing IEEE 802.21 protocol there have been specified already twelve MIH commands.
The proposed new MIH commands are therefore:

**Table 1: Proposed new MIH commands**

| **No** | **MIH Command** | **(L)ocal, (R)emote** | **Comments** |
|---|---|---|---|
| 13 | MIH MN NEMO MN Registration Query | L, R | Sent from MIHF entity of root-MR (MN) to MIHF entity of DP to initiate the registration of another MN for joining a moving network (e.g., based on NEMO mechanisms), exposing its identity. |
| | | | Usually sent from Client -> Network. |
| 14 | MIH MN NEMO MN Registration Verification | L, R | Sent from MIHF entity of root-MR (MN) to MIHF entity of DP (i) to expose the outcome of underlying protocol handling (e.g., requesting MN joined moving network based on e.g. NEMO mechanisms) and (ii) to trigger network internal verification. Usually sent from Client -> Network. |
| 15 | MIH Net NEMO MN Elimination | L, R | Sent from MIHF entity of DP to MIHF entity of root-MR (MN) to request the elimination of member(s) of a moving network, exposing the identity(-ies) of concerned user(s) and related reason(s). |
| | | | Usually sent from Serving Network -> Client. |

These commands refer to the media independent SAP 'MIH_SAP' that defines the interface between MIHF and MIH Users (see Figure 2). Currently IEEE 802.21 specifies 27 primitives.

The proposed, new primitives, defined as part of (extended) MIH_SAP, are:

**Table 2: Proposed new MIH_SAP primitives**

| **No** | **Primitive** | **Service Category** | **Description** |
|---|---|---|---|
| 28 | MIH_MN_NEMO_MN_ Registration_Query | Command | Sent from MIHF entity of root-MR (MN) to MIHF entity of DP to initiate the registration of another MN for joining a moving network (e.g., based on NEMO mechanisms), exposing its identity. |
| 29 | MIH_MN_NEMO_MN_ Registration_Verification | Command | Sent from MIHF entity of root-MR (MN) to MIHF entity of DP (i) to expose the outcome of underlying protocol handling (e.g., requesting MN joined moving network based on e.g. NEMO mechanisms) and (ii) to trigger network internal verification. |
| 30 | MIH_Net_NEMO_MN_ Elimination | Command | Sent from MIHF entity of DP to MIHF entity of root-MR (MN) to request the elimination of member(s) of a moving network, exposing the identity(-ies) of concerned user(s) and related reason(s). |

The proposed primitives are specified below.

```
 MIH MN NEMO MN Registration Query:
 
 MIH_MN_NEMO_MN_Registration_Query.request
     Function:
           This primitive is sent from MIHF entity of root-
           MR (MN) to current MIHF entity to initiate the
           registration of another MN for joining a moving
           network (e.g., based on NEMO mechanisms),
           exposing its identity.
     Semantics of service primitive
           MIH_MN_NEMO_MN_Registration_Query.request (
                SourceIdentifier,
                DestinationIdentifier,
                MNIdentifier,
                )
```

| **Name** | **Type** | **Valid Range** | **Description** |
|---|---|---|---|
| SourceIdentifier | Identifier | Any valid individual or group identifier | The identifier of entity where the request is initiated. This field may be optionally left empty if the command is local. |
| Destination-Identifier | Identifier | Valid MIHF identifier | The destination identifier of request or response. This is the identifier of local or peer MIHF. |
| MNIdentifier | Identifier | N/A | The identifier of Mobile Node that requests joining the moving network. The type of identifier may be an address range or a complete IP address. |

### When generated

This primitive is generated by MIHF entity of root-MR (MN) to initiate the registration of another MN for joining a moving network (e.g., based on NEMO mechanisms), exposing its identity.

### Effect on receipt

MIHF capable entities may respond with MIH_MN_NEMO_MN_ Registration_Query.confirm primitive.

```
 MIH_MN_NEMO_MN_Registration_Query.confirm
 Function:
 This primitive is used by MIHF to convey the outcome of its
 decision making based e.g. network operator policies.
        Semantics of service primitive
             MIH_MN_NEMO_MN_Registration_Query.confirm (
                  SourceIdentifier,
                  DestinationIdentifier,
                  DecisionResultCode,
                  DecisionReasonCode
                  )
```

| **Name** | **Type** | **Valid Range** | **Description** |
|---|---|---|---|
| Source-Identifer | Identifier | Any valid individual Or group identifier | The identifier of entity where the request is initiated. This field may be optionally left empty if the command is local. |
| DestinationIdentifier | Identifier | Valid MIHF identifier | The destination identifier of request or response. This is the identifier of local or peer MIHF. |
| DecisionResultCode | Enumerate | Success; Failure; Rejected | Result of trying to register. |
| DecisionReasonCode | Enumerated | 0-255 | Reason for decision result. |

The decision reason code for
MIH_MN_NEMO_MN_Registration_Query may be one or combination of the following reasons.

| **Decision Reason Code Id** | **Decision Reason Code** | **Meaning** |
|---|---|---|
| 1 | MN_REG_SUBSCRIPTION_ ERROR | The request is rejected because of inappropriate subscription. |
| 2 | MN_REG_NETWORK_ OVERLOAD | The request is rejected because of overload network condition. |
| ... | ... | ... |

When generated
This primitive is generated after decision making that was triggered when MIH_MN_NEMO_MN_Registration_Query.request primitive is received by MIHF.

### Effect on receipt

Upon reception of this primitive the receiving entity becomes aware of the outcome of decision making and may start known communication mechanisms like NEMO (extensions) to add requesting MN to the moving network.

### MIH MN NEMO MN Registration Verification

```
 MIH_MN_NEMO_MN_Registration_Verification.request
 Function:
  This primitive is sent from MIHF entity of root-MR (MN)
  to current MIHF entity (i) to expose the outcome of
  underlying protocol handling (e.g., requesting MN joined
  moving network based on e.g. NEMO mechanisms) and (ii) to
  trigger network internal verification.
        Semantics of service primitive
             MIH_MN_NEMO_MN_Registration_Verification.reque
             st (
                  SourceIdentifier,
                  DestinationIdentifier
                  ExecutionResultCode,
                  ExecutionReasonCode
                  )
```

| **Name** | **Type** | **Valid Range** | **Description** |
|---|---|---|---|
| Source-Identifier | Identifier | Any valid individual or group identifier | The identifier of entity where the request is initiated. This field may be optionally left empty if the command is local. |
| DestinationIdentifier | Identifier | Valid MIHF identifier | The destination identifier of request or response. This is the identifier of local or peer MIHF. |
| ExecutionResultCode | Enumerate | Success; Failure; Rejected | Result of decision execution by underlying mechanism. |
| ExecutionReasonCode | Enumerated | 0-255 | Reason for decision execution result. |

The decision reason code for
MIH_MN_NEMO_MN_Registration_Query may be one or combination of the following reasons.

| **Execution Reason Code Id** | **Execution Reason Code** | **Meaning** |
|---|---|---|
| 1 | MN_EXEC_NEMO_ ERROR | Underlying execution mechanism (e.g., NEMO) acknowledges with an error message. |
| 2 | MN_EXEC_ NEMO_ REJECTED | Underlying execution mechanism (e.g., NEMO) rejects execution. |
| ... | ... | ... |

When generated
This primitive is sent from MIHF entity of root-MR (MN) to current MIHF entity (i) to expose the outcome of underlying protocol handling (e.g., requesting MN joined moving network based on e.g. NEMO mechanisms) and (ii) to trigger network internal verification.

### Effect on receipt

Current MIHF entity at Decision Point verifies the registration execution network internally and may respond with MIH_MN_NEMO_MN_Registration_ Verification.confirm primitive.

### MIH_MN_NEMO_MN_Registration_Verification.confirm

### Function:

This primitive may be used by the current MIHF entity at Decision Point to convey the outcome of the network internal verification related to underlying protocol handling (e.g., NEMO mechanisms).

```
        Semantics of service primitive
             MIH_MN_NEMO_MN_Registration_Verification.confi
             rm (
                  SourceIdentifier,
                  DestinationIdentifier,
                  VerificationResultCode,
                  VerificationReasonCode
                  )
```

| **Name** | **Type** | **Valid Range** | **Description** |
|---|---|---|---|
| Source-Identifier | Identifier | Any valid individual or group identifier | The identifier of entity where the request is initiated. This field may be optionally left empty if the command is local. |
| DestinationIdentifier | Identifier | Valid MIHF identifier | The destination identifier of request or response. This is the identifier of local or peer MIHF. |
| VerificationResult Code | Enumerate | Success; Failure; Rejected | Result of network internal verification. |
| VerificationReason Code | Enumerated | 0-255 | Reason for verification result. |

The verification reason code for MIH_MN_NEMO_MN_Registration_ Verification may be one or combination of the following reasons.

| **Verification Reason Code Id** | **Verification Reason Code** | **Meaning** |
|---|---|---|
| 1 | MN_VERIFICATION_MAP_ ERROR | Unsuccessful verification because of still exisiting binding in the Mobility Anchor Point (assuming e.g. NEMO Basic Support protocol as underlying mechanism). |
| ... | ... | ... |

When generated
This primitive is generated after network internal verification that was triggered when MIH_MN_NEMO_MN_Registration_ Verification.request primitive is received by MIHF.

### Effect on receipt

Upon reception of this primitive the receiving entity becomes aware of the overall outcome of MIH protocol handling and may finally (and again) process moving network internally the registration request.

### MIH Net NEMO MN Elimination

```
  MIH_Net_NEMO_MN_Elimination.request
 Function:
  This primitive is sent from MIHF entity of Decision Point
  to MIHF entity of root-MR (MN) to request the elimination
  of member(s) of a moving network, exposing the identity(-
  ies) of concerned user(s) and related reason(s).
        Semantics of service primitive
             MIH_Net_NEMO_MN_Elimination.request (
                  SourceIdentifier,
                  DestinationIdentifier,
                  MNIdentifier,
                  EliminationReasonCode
                  )
```

| **Name** | **Type** | **Valid Range** | **Description** |
|---|---|---|---|
| Source-Identifier | Identifier | Any valid individual or group identifier | The identifier of entity where the request is initiated. This field may be optionally left empty if the command is local. |
| DestinationIdentifier | Identifier | Valid MIHF identifier | The destination identifier of request or response. This is the identifier of local or peer MIHF. |
| MNIdentifier (Note 1) | Identifier | N/A | The identifier of a Mobile Node that has to be eliminated from the moving network. The type of identifier may be an address range or a complete IP address. |
| EliminationReason Code (Note 1) | Integer | 0-255 | Reason for requesting the elimination. |

| | | | |
|---|---|---|---|
| Note 1: May also be realized as a list (as optimization), which is not done here. | | | |

The elimination reason code for MIH_Net_NEMO_MN_Elimination may be one or combination of the following reasons.

| **Elimination Reason Code Id** | **Elimination Reason Code** | **Meaning** |
|---|---|---|
| 1 | Net_ELIMINATI ON_SUBSCRIPTI ON ERROR | The elimination is requested because of inappropriate subscription. |
| 2 | Net ELIMINATI | The elimination is requested |
| | ON _NETWORK_ OVERLOAD | because of overload network condition. |
| ... | ... | ... |

When generated
This primitive is generated from MIHF entity of Decision Point to MIHF entity of root-MR (MN) to request the elimination of member(s) of a moving network and sends the identifier(s) of concerned user(s) and related reason(s).

### Effect on receipt

MIHF capable entities may respond with MIH_Net_NEMO_MN_ Elimination.confirm primitive.

```
  MIH_Net_NEMO_MN_Elimination.confirm
        Function:
             This primitive is used by MIHF to acknowledge
             (success or failure) the elimination of
             concerned user(s).
        Semantics of service primitive
             MIH_Net_NEMO_MN_Elimination.confirm (
                  SourceIdentifier,
                  DestinationIdentifier,
                  EliminationExecutionResultCode
                  EliminationExecutionReasonCode
                  )
```

| **Name** | **Type** | **Valid Range** | **Description** |
|---|---|---|---|
| Source-Identifier | Identifier | Any valid individual Or group identifier | The identifier of entity where the request is initiated. This field may be optionally left empty if the command is local. |
| DestinationIdentifier | Identifier | Valid MIHF identifier | The destination identifier of request or response. This is the identifier of local or peer MIHF. |
| EliminationExecution ResultCode (Note 1) | Enumerate | Success; Failure; Rejected | Result of elimination execution by underlying mechanisms (e.g., NEMO) |
| EliminationExecution ReasonCode (Note 1) | Enumerated | 0-255 | Reason for result of elimination execution by underlying mechanisms. |

| | | | |
|---|---|---|---|
| Note 1: May also be realized as a list (as optimization), which is not done here. | | | |

The verification reason code for MIH_Net_NEMO_MN_Elimination may be one or combination of the following reasons.

| **Elimination Execution Reason Code Id** | **Elimination Execution Reason Code** | **Meaning** |
|---|---|---|
| 1 | Net_ELIMINATION_EXECU TION_ ERROR_NEMO | Unsuccessful elimination execution because of protocol error of underlying NEMO Basic Support protocol. |
| ... | ... | ... |

When generated
This primitive is generated when elimination procedure of concerned user(s) is performed, triggered by MIH_Net_NEMO_ MN_Elimination.request primitive. The result is exposed.

### Effect on receipt

Upon reception of this primitive the Decision Point DP verifies the elimination of the user(s) network internally. It may be necessary that the DP requests elimination again (or in an "unfriendly" case to trigger other mechnanisms, which are not within the scope of this invention).

If the mobile network operator (MNO) has the above-mentioned proposed means to cope with network controlled membership of moving networks using MIH services the following benefits are gained:
(radio) network resources are efficiently controlled; optimized handovers for moving networks are ensured pro-actively, i.e. basically independent of handover initiation and in advance;
to control the constituting nodes of moving networks in advance (pro-active) a potential later handover process is optimized in terms of shortened handover time because necessary actions are already done;
for (nested) moving networks operator policies are enforced; a control logic (i.e. MIHF) may be placed in whatever network element, independent of solutions provided by underlying mobility management (MM) protocols (e.g. NEMO uses mobility access points (MAPs) such as the home agent (HA) for enforcement); and
proper protocol handling.

Moreover, the proposed solution is also independent of the underlying mobility protocol, hence flexible, and the network operator's investment is saved.

According to Figure 1 the user equipment UE3 may get the possibility to be able in case of the forced elimination from the moving network 1 to perform also optimized handover in the sense that the user equipment is informed in advance so that the user equipment is able to start its own processing to attach directly to an access network, i.e. network discovery and selection, mobility related signaling etc.

Because future mobility support will go far beyond simple (optimized) terminal mobility (as today), it is crucial for future mobile networks to enable mobile network operators to control the constituting nodes of the mentioned network types.

According to the present invention, future telecommunication networks may support mobility for other types of mobility endpoints such as moving networks (vehicular, train or personal area networks) utilizing IETF protocols like NEMO, IEEE 802.21 may be used to optimize the mobility process of these new types of mobility endpoints, and
IEEE 802.21 may be used to enforce network-control related to the mobility process (of mentioned various types of mobility endpoints).

In the context of 3GPP networks the present invention and its proposed extensions are also applicable for
user equipment-initiated, but network-controlled process for joining a moving network, and network-initiated pro-active elimination of user equipments from moving networks, thus, focusing on central aspects of 3GPPs mobile networks.

In the following the applicability of the present invention to 3GPP networks, and more specifically to 3GPPs network elements is considered.

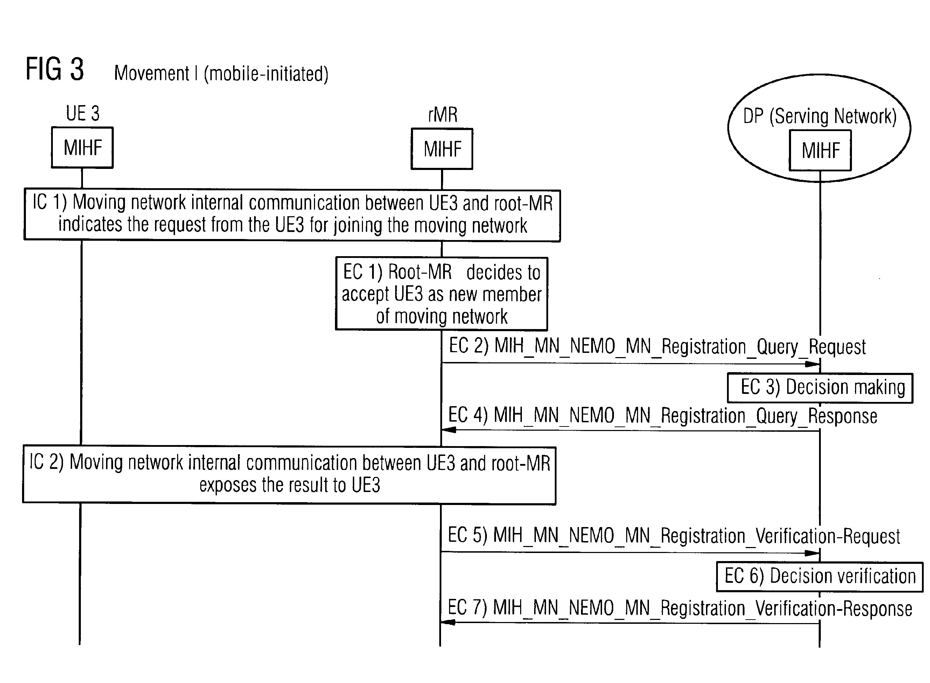

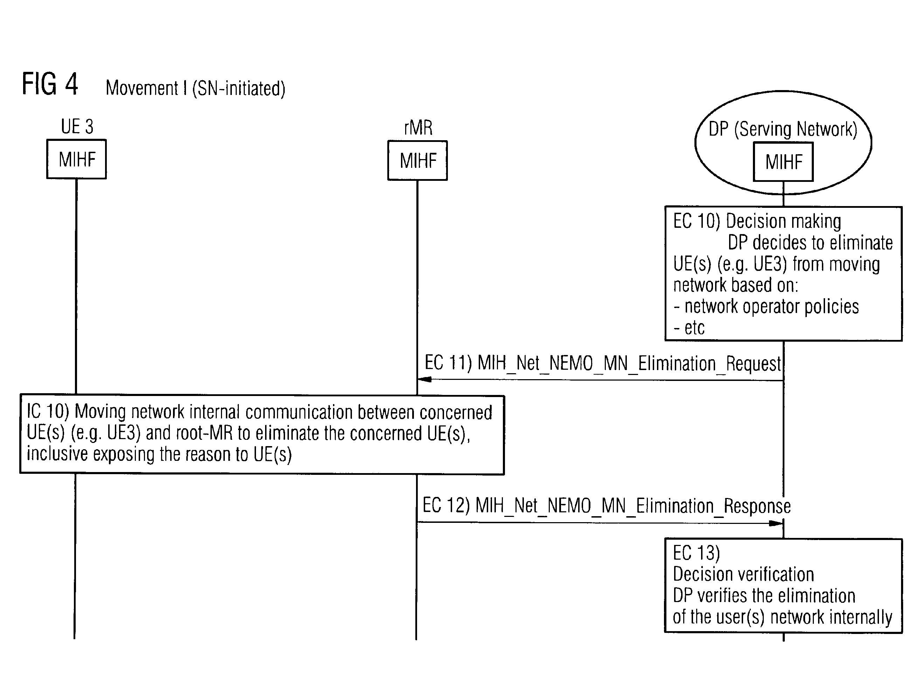

Figure 3 and 4 illustrate simplified status diagrams or message flows used in the present invention, focusing on 3GPP main aspect of having network-controlled access on (radio) resources.

In detail, Figure 3 illustrates a mobile-initiated, but network-controlled process for joining a moving network, while Figure 4 is directed to the pro-active elimination of a user equipment from a moving network, which is initiated by a serving network. Thus, both message flows refer to a movement I into a moving network or out of a moving network.

In general, the used term "serving network" refers to IEEE 802.21 denotation and may be comparable or may be mapped on 3GPPs evolved packet core (EPC) of the core network 3 shown in Figure 1. Moreover, the depicted decision point DP may be mapped on an existing network element according to 3GPP. It is reasonable to map the decision point DP onto 3GPPs known network element (e.g. PCRF) since it is already involved today as part of policy and charging control (PCC) architecture to elaborate on subscriber data and policies.

According to Figure 3 a moving network internal communication is set up between an external user equipment UE3 and the root mobile router rMR indicating therewith a request from the user equipment UE3 for joining the moving network 1. This internal communication IC1 may be realized by standard procedures well-known in the art and defined in Figure 3. In a step EC1 a root mobile router rMR may decide first of all for its own whether it accepts said external user equipment UE3 for the moment as a new member of its moving network 1. Since the root mobile router rMR may perform optimized mobile management (MM) for the whole moving network 1, e.g. based on IEEE 802.21, it has to register the additional user equipment UE3 at the mobile management control logic in the network performing the optimization. This is necessary due to the above-mentioned reasoning to be able to perform optimized mobile management for the whole moving network 1.

In a step EC2 the root mobile router rMR triggers registration of the external user equipment UE3 by sending the additional and new MIH message "MIH_MN_NEMO_MN_Registration_Query_Request" to the decision point DP of the serving network. It is readily understood by a person skilled in the art that of course alternative names could be used for this message. This MIH command or message may further expose the identification of the requesting user equipment, e.g. user equipment UE3, which wants to join the moving network 1.

In a step EC3 the decision point DP of the serving network decides whether the requesting user equipment UE3 will be accepted to join the moving network or reject it. In detail, after receiving the registration request in step EC2 for the requesting user equipment the decision point DP may decide based on network operator policies or network conditions such as current load of the access network or a user equipment's subscription or further decision elements or a combination of these elements whether the requesting user equipment shall be accepted or rejected for joining the moving network 1. In a step EC4 the result of the decision may be exposed by sending a new MIH command or message "MIH_MN_NEMO_MN_Registration_Query_Response" to the root mobile router rMR of the moving network. In this respect, the decision result sent to the root mobile router may be based on a knowledge of the decision point about the (access) network load and thus is able to reject the user equipment UE3 because it predicts that a potential handover of the moving network afterwards may not be possible or at least may not be possible in an optimized way. Moreover, the decision made by the decision point DP may indicate also the reason for the decision, thus enabling the moving network or the user equipment to set up alternative strategies.

In a step IC2 a further moving network internal communication between the requesting user equipment UE3 and the root mobile router rMR exposes the decision result to the user equipment. This internal communication may be realized again by standard procedures well-known in the art. In detail, in case the request was accepted by the decision point DP the root mobile router rMR may start also known communication mechanisms such as NEMO (with extensions) in order to add the requesting user equipment UE3 to the moving network 1. This communication includes also a home agent (HA) communication, not depicted in the Figure.

After e.g. successful NEMO protocol processing for accepting the requesting user equipment to the moving network 1, in step EC5 the root mobile router rMR finally may indicate the successful outcome of underlying mechanisms so that the decision point DP is triggered for verifying this execution network internally in a step EC6. This is realized by sending the additional MIH command or message "MIH_MN_NEMO_MN_Registration_Verification_Request" to the decision point DP of the serving network. Of course, alternative names may again be used for this MIH command.

In the step EC6 the decision point DP verifies registration execution by the underlying mobility protocol, e.g. NEMO, network internally. For example, considering NEMO by checking the binding cash of the concerning home agent HA. With step EC6 the whole registration process is completed by sending the new MIH command or message "MIH_MN_NEMO_MN_Registration_Verification_Response" to the root mobile router rMR of the moving network. The successful registration, thus, ends with receiving the positive acknowledgement in this new MIH command or message as set out in step EC7.

In case the request was rejected by the decision verification in step EC6 the root mobile router may start again a known communication mechanism such as NEMO to remove the user equipment from the moving network (not shown in Figure 3).

Figure 4 illustrates a simplified status diagram or flow messages of a pro-active elimination of a user equipment from a moving network initiated by the serving network (SN). In a step EC10 the decision point DP of the serving network makes a decision whether to eliminate either dedicated users or entire user groups from a moving network 1, i.e. single user equipments or groups of user equipments. This decision may be based again on network operator policies, network conditions as current load of their access network, user equipment's subscription or other decision elements or combinations thereof. An example for entire user groups may be the separation of users into the classes "standard" and "premium" which could mean, in this example, that the user equipments of the group "standard" have to be eliminated from the moving network 1, e.g. due to network load of the related access system.

The result of the decision may be exposed in a step EC11 by sending a new MIH command or message "MIH_NET_NEMO_MN_Elimination_Request" to the root mobile router rMR of the moving network 1. This elimination request of step EC11 may include identifier(s) of concerned user equipments and indicate also the reason for the decision. Thus, e.g. an explicit elimination of user equipment as a "standard" user may be necessary because a predicted later handover may not be possible due to limited resources in the potential target access networks for the whole moving network with all its members, i. e. standard and premium users.

In a step IC10 a moving network internal communication between concerned user equipments and the root mobile router may be realized to eliminate the concerned user equipments. In addition, there may be exposed the reason to the user equipments for the elimination. This internal communication is again realized by well-known standard procedures. In addition, the root mobile router rMR may start also known communication mechanisms like NEMO (with extensions) to eliminate the concerned user equipments from the moving network 1. This may include also home agent (HA) communication (not depicted in Figure 4).

After e.g. successful NEMO (extensions) protocol processing the root mobile router may acknowledge in a step EC12 the elimination of concerned user equipments by sending a new MIH command or message
"MIH_NET_NEMO_MN_Elimination_Response" to the decision point of the serving network.

In a step EC13 the decision point DP verifies the elimination of the user(s) network internally since the information is also available in the network (e.g. in the binding cash of the home agent (HA). With this decision verification the whole elimination process is completed, starting with sending "MIH_NET_NEMO_MN_Elimination_Request" and ending with sending "MIH_NET_NEMO_MN_Elimination_Response".

Thus, according to the present invention an existing MIH protocol such as IEEE 802.21 protocol may be extended by the further MIH-commands or messages:
registration query command, for initiating a registration of a joining user equipment to a moving network,
registration verification command, for verifying said registration and
elimination command, for eliminating a user equipment from said moving network.

### Movement II

According to a further aspect of the present invention a handover of a moving network 1 from a first access network 2A to a second access network 2B may be also realized by extending existing MIH-protocols such as IEEE 802.21 protocols. In detail, according to the present invention amendments are proposed for
addressing the necessity to query for related mobility management protocols which support network mobility (aspect 1); and
addressing the necessity to query for inherent properties of moving networks that are, e.g., supported address management schemes at its ingress as well as at its egress interfaces (aspect 2).

All proposed amendments are applicable for support of the new mobility endpoints, e.g., root mobile routers of moving networks. Only if the addressed properties of the target network (now inclusive its ability to support network mobility) or known correct and efficient handover decisions can be made.

According to the present invention a reduced handover failure ratio and handover latency is realized. Thus, future telecommunication networks could be optimized particularly when considering real-time applications. The MIH protocol IEEE 802.21 discusses and specifies already a solution that facilitates handover optimization between heterogeneous media focusing solely on terminal mobility. Moreover, it is discussed already to introduce the (optional) parameter "MobilityManagementSupported" in the MIH commands or messages "MIH_NET_HO_Candidate_Query.response/confirm" addressing only the aspect of terminal mobility.

According to these considerations "MobilityManagementSupported" TLV is of data type "IP_MOBILITY_MGMT", which indicates the type of mobility management protocol supported by user equipment or access network. A related information element (IE) is added to the access network specific IEs.

With this respect, the data type "IP_MOBILITY_MGMT" is defined as bitmap (16) and is specified for:
mobile IPv4
mobile IPv4 regional registration
mobile IPv6
hierarchical mobile IPv6
low latency handoffs
fast handovers for mobile IPv6
IKEv2 mobility and multi homing protocol
Bit 7-15: (reserved)

As mentioned above this focus is not sufficient for future telecommunication networks and has to be further extended to incorporate mobility support for new mobility end points such as moving networks, i.e. vehicle, train or personal area networks, that may be supported by protocols such as NEMO. According to the present invention it is proposed to extend the scope of the data type "IP_MOBILITY_MGMT" accordingly, and, also the scope of MICs message commands or messages "MIH_NET_HO_Candidate_Query_request/confirm".

Relevant in the context of this invention is also the set of IP configuration methods. As mentioned above, it is necessary to query also for supported IP configuration methods on ingress interfaces of the moving network (i.e., interfaces between the root mobile router rMR and the fixed or mobile nodes in the moving network), when considering NEMO as chosen solution. For IP configuration methods on egress interfaces (i.e. interfaces between a root mobile router rMR and fixed mobile network infrastructure (access networks)) the already specified data type "IP_CONFIG_METHODS" may be applied. This data type "IP_CONFIG_METHODS" is defined as bitmap (32 and is specified for:
IPv4 static configuration
IPv4 dynamic configuration (DHCPv4)
mobile IPv4 with foreign agent (FA) care of address (CoA) (FA-CoA)
mobile IPv4 without FA (co-located CoA)
reserved for IPv4 address configurations
IPv6 stateless address configuration
IPv6 stateful address configuration (DHCPv6)
IPv6 manual configuration
reserved.

According to the present invention it is, thus, proposed to extend the scope of "IP_CONFIG_METHODS" to "a set of IP configuration methods for mobile nodes or root mobile routers (egress interfaces)".

In detail, it is proposed to add, detect and evaluate a new data type that may be termed as "IP_CONFIG_METHODS_INGRESS_INTERFACES" and that may be defined as bitmap (32). Hence, also the scope of MICS messages "MIH_MN_HO_Candidate_Query.response/confirm" and "MIH_N2N_HO_Query_Resources.request/indication/response/confirm" is extended.

Finally, it has to be mentioned that the entire handover process is usually divided into different phases, which are discussed in IEEE 802.21 as information query, resource availability check, resource preparation, establishment of new L2 connection (including link-up indication), higher layer handover execution, resource release etc. The mentioned MICS messages are used during handover preparation with the phase "resource availability check", the mobility management protocols and address management schemes are considered as resources.

According to the present invention it is proposed to add the missing aspects to e.g. 802.21 protocol to deal with the described problem's base. Consequently, amendments are proposed for:

### Aspect 1:

Addressing the necessity to query for related mobility management protocols which support network mobility.

This may be realized in a possible implementation in 802.21 protocol by means of extending the scope of the data type "IP_MOBILITY_MGMT" as discussed already for MICS messages "MIH_NET_HO_Candidate_Query.response/confirm". If the mentioned data type will be used in other messages, what is said in this invention has also to be applied for these messages.

### Aspect 2:

Addressing the necessity to query for inherent properties of moving networks that are e.g. supported address management schemes at its ingress as well as at its egress interfaces.

This may be realized in a possible implementation in 802.21 protocol by means of extending the scope of data type "IP_CONFIG_METHODS" used in MICS messages:
"MIH_MN_HO_Candidate_Query.response/confirm" and
"MIH_N2N_HO_Query_Resources.request/indication/response/confirm".

This may be realized in a possible implementation in 802.21 by means of adding a new data type:
"IP_CONFIG_METHODS_INGRESS_INTERFACES" to MICS messages:
"MIH_MN_HO_Candidate_Query.response/confirm" and
"MIH_N2N_HO_Query_Resources.request/indication/response/confirm".

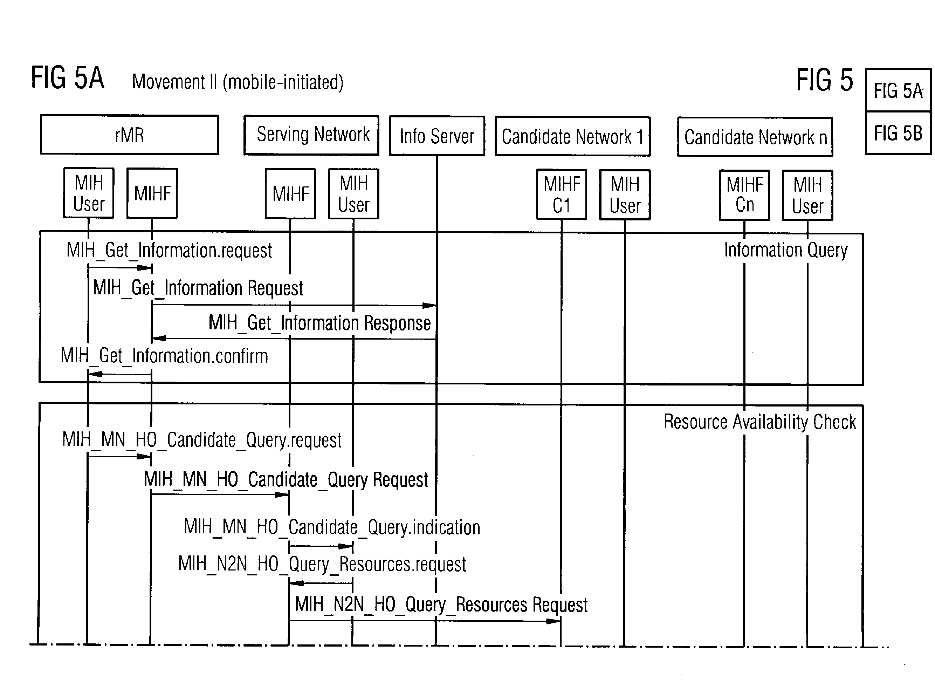

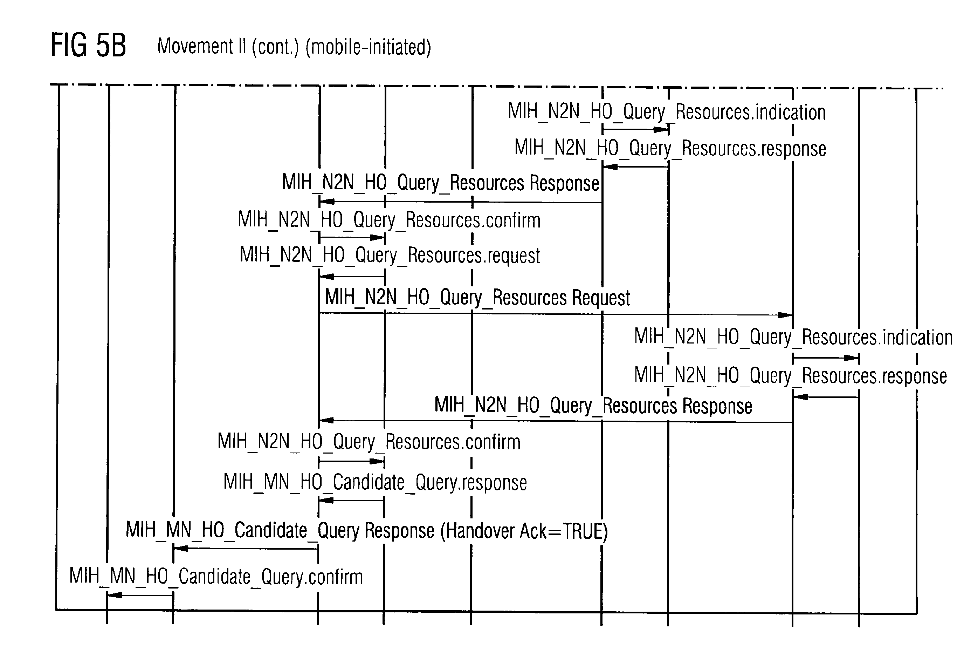

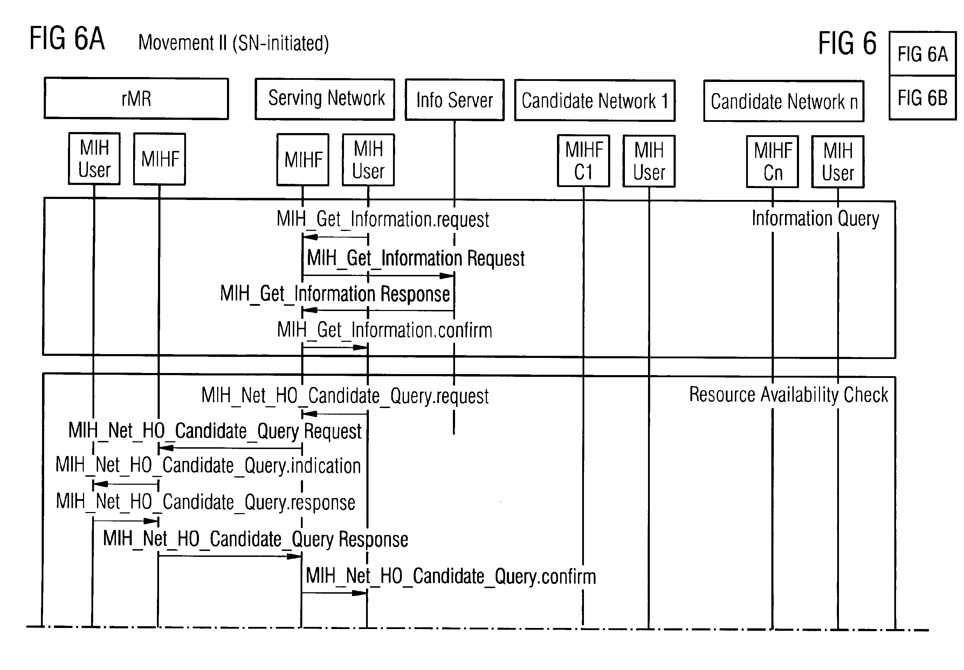

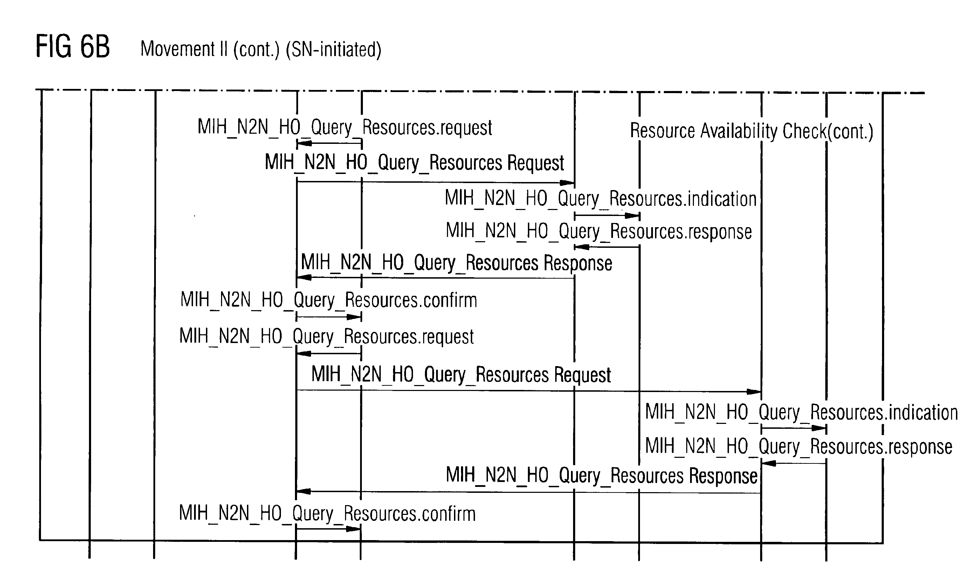

Figures 5 and 6 illustrate simplified status diagrams or message flows according to 802.21 including the relevant MICS messages "MIH_NET_HO_Candidate_Query",
"MIH_MN_HO_Candidate_Query", and
"MIH_N2N_HO_Query_Resources", which are used in the phase "resource availability check", and hence, are part of handover preparation phase before the actual handover decision making.

Figures 5A and 5B illustrate a first portion of a mobile-initiated handover procedure. A mobile node, i.e. a root mobile router rMR is connected to the serving network and has access to MIH information server. The root mobile router queries information about neighboring networks by sending the "MIH_GET_INFORMATION Request" to the information server. The information server responds with "MIH_GET_INFORMATION Response". This information query may be attempted as soon as a mobile node is first attached to the network.

During a resource availability check the root mobile router triggers a mobile-initiated handover by sending "MIH_MN_HO_Candidate_Query Request" to e.g. the decision point of the serving network. This request may contain the information of potential candidate networks. The serving network queries the availability of resources at the candidate networks by sending "MIH_N2N_HO_Query_Resources Request" to one or multiple candidate networks, i.e. access networks.

The candidate network responds with "MIH_N2N_HO_Query_Resources Response" and the serving network notifies the root mobile router of the resulting resource availability at the candidate networks through the "MIH_MN_HO_Candidate_Query Response" which is submitted to the MIH user of the root mobile router by the command MIH_MN_HO_Candidate_Query.confirm". The further message flow is not shown in Figure 5A and 5B since it is not essential to the present invention. However, it may be referred to the IEEE 802.21 standard for the further message flows.

In a similar way Figure 6A and 6B illustrate a first portion of a message flow for a network-initiated handover procedure as defined by IEEE 802.21 and including the respective commands to be modified and interpreted by the present invention. According to Figure 6A the serving network sends a "MIH_GET_Information Request" to the information server to get neighboring network information, and the information server responds by sending a "MIH_GET_Information Response".

In the resource availability check the serving network triggers a network-initiated handover by sending a "MIH_NET_HO_Candidate_Query Request" to the root mobile router. The root mobile router responds through "MIH_NET_HO_ Candidate_Query Response" which contains the acknowledgement of the root mobile router about the handover and its preferred link and point of service lists.

According to Figure 6B which constitutes a continuation of the message flow of Figure 6A the serving network sends a "MIH_N2N_HO_Query_Resources Request" to one or more candidate networks to check the availability of the resource at candidate networks. The candidate networks respond by sending a "MIH_N2N_HO_Query_Resouces Response" to the serving network.

The further message flow is again not shown in Figure 6, since it is not relevant to the present invention.

Using the request "MIH_NET_HO_Candidate_Query.request" basically the network can now query on required network mobility management protocols. Thus, according to the present invention, the "MIH_NET_HO_Candidate_Query.response/confirm" now includes extended protocol related information which can be detected and interpreted by the moving network or serving network in an appropriate way.

Furthermore, using the request "MIH_MN_HO_Candidate_Query.request", basically the user equipment UE can now query on whether IP address configuration method can be supported in the candidate network. Thus, according to the present invention "MIH_MN_HO_Candidate_Query.response/confirm" now includes extended IP address related information.

Finally, using the extended messages "MIH_N2N_HO_Query_Resources.*", the serving network can query the extended IP address related information of the target network for the intending network handover.

For emphasizing this aspect of the present invention the following 3GPP-oriented scenario is considered for Figure 1. In detail, Figure 1 may depict a use case in a 3GPP environment based on NEMO as an example for a mobility management protocol supporting network mobility. The access network 2A is considered to be a 3GPP access network, e.g.

UMTS network, while the access network 2B may constitute a non-3GPP access network.

Considering now only the aspect of address assignment on the egress interface (i.e. external interface) of the root mobile router rMR when moving to the non-3GPP access network 2B. This access network may support only certain mobility management protocols. It is obvious that during handover preparation the supported mobility management protocols for the moving network have to be notified to make the entire process efficient. This is, of course, also valid for supported address management mechanisms for the ingress interfaces (i.e. internal interfaces) of the moving network 1 in the non-3GPP access. According to the present invention a possible implementation in IEEE 802.21 may be as follows: in this respect the proposed extensions are in bold text or highlighted with "new parameter/type".

Considering the two aspects of the problem's base as mentioned above, the following deals both aspects separately:
Aspect 1: potential implementation for addressing the necessity to query for related mobility management protocols.
Aspect 2: potential implementation for addressing the necessity to query for supported address management schemes.

### Aspect 1

### Information service elements

### Information elements:

| **Access Network Specific Information Elements** | | |
|---|---|---|
| TYPE_IE_MOBILITY_MANAG EMENT_PROTOCOL | The type of mobility management protocol supported by MN **or root mobile router**_or access network | IP_MOBILITY _MGMT |

```
 MIH_Net_HO_Candidate_Query.response
 
 Function
 
 Semantics of service primitive
 
   MIH_Net_HO_Candidate_Query.response(
                   DestinationIdentifier,
                   CurrentLinkIdentifier,
                   PreferredLinkList,
                   RequestedResourceSet,
                   HandoverStatus,
                   MobilityManagementSupported,
                   Status
                   )
```

### Parameters:

| **Name** | **Type** | **Description** |
|---|---|---|
| Destination Identifier | MIHF_ID | This identifies a remote MIHF which will be the destination of this request. |
| Current Link Identifier | LINK_TUPLE_ ID | This identifies the current link. |
| Preferred Link List | LIST(LINK_POA A _LIST) | list of PoAs for each link, suggesting the new access networks and PoAs to which handover initiation should be considered. This may be different than the networks that were suggested in the handover request. The list is sorted from most preferred first to least preferred last. |
| Requested Resource Set | LIST(QOS_PARA M) | Requested resources needed by the mobile terminal. |
| Handover Status | HANDOVER_STATUS | Lists the reason for aborting/declining the handover request. |
| Mobility Management Supported | IP_MOBILITY_M GMT | (Optional) This indicates the type of mobility management protocol supported by mobile terminal or root mobile router. |
| Status | STATUS | Status of operation. |

```
 MIH_Net_HO_Candidate_Query.confirm
 
 Function
 
 Semantics of service primitive
 
   MIH_Net_HO_Candidate_Query.confirm (
                   SourceIdentifier,
                   CurrentLinkIdentifier,
                   PreferredLinkList,
                   RequestedResourceSet,
                   HandoverStatus,
                   MobilityManagementSupported,
                   Status
                   )
```

### Paramters:

| **Name** | **Type** | **Description** |
|---|---|---|
| Source Identifier | MIHF_ID | Shall contain the MIHF ID of the mobile node that sent the MIH_Net_HO_Candidate_Query response message. |
| Current Link Identifier | LINK_TUPLE_ ID | This identifies the current link. |
| Preferred Link List | LIST(LINK_POA A _LIST) | list of PoAs, suggesting the new access networks to which handover initiation should be considered. This may be different than the networks that were suggested in the handover request. The list is sorted from most preferred first to least preferred last. |
| Requested Resource Set | LIST (QOS_PARA M) | Requested resources needed by the mobile terminal. |
| Handover Status | HANDOVER_STAT US | Lists the reason for aborting/declining the handover request. |
| Mobility Management Supported | IP_MOBILITY_M GMT | (Optional)This indicates the type of Mobility Management Protocol supported by mobile terminal or root mobile router. |
| Status | STATUS | Status of operation. |

### Data types for IP configuration

| **Type Name** | **Derived From** | **Definition** | **Valid Range** |
|---|---|---|---|
| IP_MOBI LITY_ MT | BITMAP MG (16) | Indicates the supported mobility management protocols | Bit 0: Mobile IPv4 |
| | | | Bit 1: Mobile IPv4 Regional Registration |
| | | | Bit 2: Mobile IPv6 |
| | | | Bit 3: Hierarchical Mobile IPv6 |
| | | | Bit 4: Low Latency Handoffs |
| | | | Bit 5: Fast Handovers for Mobile IPv6 |
| | | | Bit 6: IKEv2 Mobility and Multihoming Protocol |
| | | | **Bit 7: Basic NEMO (note 1)** |
| | | | **Bit 8: Basic NEMO & extension [tba] (note 1)** |
| | | | Bit 9-15: (Reserved) |

| | | | |
|---|---|---|---|
| Note 1: In this example IETF NEMO protocol is choosen; others are also possible and not excluded. However, considering today's maturity of standardization, it may be necessary to specify extensions to the NEMO basic protocol that are discussed or specified in Internet or personal IETF drafts. | | | |

### Aspect 2:

```
 MIH_MN_HO_Candidate_Query.response
 
 Function
 
 Semantics of service primitive
 
       MIH_MN_HO_Candidate_Query.response (
                 DestinationIdentifier,
                 CurrentLinkIdentifier,
                 PreferredCandidateLinkList,
                 AvailableResourceSet,
                 IPConfigurationMethod,
                 IPConfigurationMethodIngressInterfaces
                 DHCPServerAddress,
                 FAAddress,
                 AccessRouterAddress,
                 IPAddressInformationStatus,
                 Status
                 )
```

### New parameter:

| **Name** | **Type** | **Description** |
|---|---|---|
| IP Configuration Method Ingress Interfaces | IP_CONFIG_MET HODS_INGRESS_ INTERFACES | (Optional) IP configuration method on ingress interfaces of moving network or PAN. |

When generated
The MIH User invokes this primitive in response to an MIH_MN_HO_Candidate_Query request message from a peer MIHF entity in mobile node or root mobile router and possibly after the exchange of MIH_N2N_HO_Query_Resources messages with the MIHF in the candidate networks.

```
 MIH_MN_HO_Candidate_Query.confirm
 
 Function
 
 Semantics of service primitive
 
       MIH_MN_HO_Candidate_Query.confirm (
                 SourceIdentifier,
                 CurrentLinkIdentifier,
                 PreferredCandidateLinkList,
                 AvailableResourceSet,
                 IPConfigurationMethod,
                 IPConfigurationMethodIngressInterfaces
                 DHCPServerAddress,
                 FAAddress,
                 AccessRouterAddress,
                 IP Address Information Status,
                 Status
                 )
```

### New parameter:

| **Name** | **Type** | **Description** |
|---|---|---|
| IP Configuration Method Ingress Interfaces | IP_CONFIG_MET HODS_INGRESS_ INTERFACES | (Optional) IP configuration method on ingress interfaces of moving network or PAN. |

MIH_N2N_HO_Query_Resources
MIH_N2N_HO_Query_Resources.request
Function

This primitive is used by an MIHF on the serving network to communicate with its peer MIHF on the candidate network. This is used to prepare the new link resource for impending handover and query the available link resource and IP address related information of the candidate network **and potentially connetced moving networks or PANs.**

```
 Semantics of service primitive
 
       MIH_N2N_HO_Query_Resources.request (
                 DestinationIdentifier,
                 QueryResourceList,
                 IPConfigurationMethod,
                 IPConfigurationMethodIngressInterfaces
                 DHCPServerAddress,
                 FAAddress,
                 AccessRouterAddress
                 )
```

### New parameter:

| **Name** | **Type** | **Description** |
|---|---|---|
| IP Configuration Method Ingress Interfaces | IP_CONFIG_METHODS_INGRESS_INTERFACES | (Optional) IP configuration method for ingress interfaces of connected moving network or PAN. |

When generated
This primitive is generated after receiving the MIH_MN_HO_Candidate_Query request message from the MIHF on the mobile node **or the root mobile router** in the case of mobile-initiated handover. In the case of network-initiated handover, this primitive is generated after receiving the MIH_Net_HO_Candidate_Query response message from the mobile node_**or the root mobile router.**

```
 MIH_N2N_HO_Query_Resources.indication
 
 Function
 
 Semantics of service primitive
 
       MIH_N2N_HO_Query_Resources.indication (
                 SourceIdentifier,
                 QueryResourceList,
                 IPConfigurationMethod,
                 IPConfigurationMethodIngressInterfaces
                 DHCPServerAddress,
                 FAAddress,
                 AccessRouterAddress
                 )
```

### New parameter:

| **Name** | **Type** | **Description** |
|---|---|---|
| IP Configuration Method Ingress Interfaces | IP_CONFIG_METHODS_INGRESS_INTERFACES | (Optional) Current IP configuration method for ingress interfaces of connected moving network or PAN. |

MIH_N2N_HO_Query_Resources.response
Function

This primitive is used by an MIHF on the candidate network to communicate with its peer MIHF on the serving network which sent out an MIH_N2N_HO_Query_Resources request. This is used to respond with the result of any resource preparation for the impending handover and to notify the MIHF on the serving network of the link resource status of the candidate network. It is also used to provide IP address related information of the candidate networks **and potentially connetced moving networks or PANs.**

```
 Semantics of service primitive
 
       MIH_N2N_HO_Query_Resources.response (
                 DestinationIdentifier,
                 ResourceStatus,
                 AvailableResourceSet,
                 IPConfigurationMethod,
                 IPConfigurationMethodIngressInterfaces
                 DHCPServerAddress,
                 FAAddress,
                 AccessRouterAddress,
                 IPAddressInformationStatus,
                 Status
                 )
```

### New parameter:

| **Name** | **Type** | **Description** |
|---|---|---|
| IP Configuration Method Ingress Interfaces | IP_CONFIG_METHODS_INGRESS_INTERFACES | (Optional) Current IP configuration method for ingress interfaces of connected moving network or PAN. |

MIH_N2N_HO_Query_Resources.confirm
Function

This primitive is generated by the MIHF on the serving network to respond with the result of any resource preparation for the impending handover and to notify the link resource status of the candidate network. It also carries IP address related information on the candidate networks **and potentially connetced moving networks or PANs** to MIH Users on the serving network.

```
 Semantics of service primitive
 
       MIH_N2N_HO_Query_Resources.confirm (
                 SourceIdentifier,
                 ResourceStatus,
                 AvailableResourceSet,
                 IPConfigurationMethod,
                 IPConfigurationMethodIngressInterfaces
                 DHCPServerAddress,
                 FAAddress,
                 AccessRouterAddress,
                 IPAddressInformationStatus,
                 Status
                 )
```

### New parameter:

| **Name** | **Type** | **Description** |
|---|---|---|
| IP Configuration Method Ingress Interfaces | IP_CONFIG_METHODS_INGRESS_INTERFACES | (Optional) IP configuration method of ingress interfaces of connected moving network or PAN. |

Type identifiers for information elements

### New type:

| **Type** | **Identifier** |
|---|---|
| TYPE_IE_NETWORK_IP_CONFIG_METHODS_INGRESS_INTERFACES | 0x1000010B |

Data type definition
Derived data types
Data types for IP configuration

| **Type Name** | **Derived From** | **Definition** | **Valid Range** |
|---|---|---|---|
| IP_CONFIG_METHODS | BITMAP (32) | A set of IP configuration methods **(for mobile nodes root mobile** address **routers (egress** Bit **interface(s))** | Bit 0: IPv4 static configuration |
| | | | Bit 1: IPv4 dynamic configuration (DHCPv4) |
| | | | Bit 2: Mobile IPv4 with foreign agent (FA) care of IP address (CoA) (FA-CoA) |
| | | | Bit 3: Mobile IPv4 without FA (Co-located CoA) **and** |
| | | | Bit 4-10: reserved for IPv4 configurations |
| | | | 11: IPv6 stateless address configuration |
| | | | Bit 12: IPv6 statefull address configuration (DHCPv6) |
| | | | Bit 13: IPv6 manual configuration |
| | | | Bit 14-31: Reserved |
| IP_CONFIG_STATUS | BITMAP (8) | Status of the IP configuration methods | Bit 0: IP configuration method is not available |
| | | | Bit 1: DHCP Server address is not available |
| | | | Bit 2: FA address is not available |
| | | | Bit 3: Access Router address is not available |
| | | | Bit 4: No information is provided due to accessibility of same entity (FA, Access Router, DHCP Server, **root-MR,** etc) |
| | | | Bit 5-7: Reserved |
| **IP_CONFIG_METHODS_INGRESS_INTERFACES(note 2)** | **BITMAP (32)** | **A set of IP configuration methods for ingress interfaces of moving networks or PANs** | **Bit 0-10: Reserved for IP address configurations for LFNs (note 1)** |
| | | | **Bit 11-20: Reserved for IP for address configurations for LMNs (note 1)** |
| | | | **Bit 21-30: Reserved for IP address configurations for VMNs (note 1)** |
| | | | **Bit 31: Reserved** |

| | | | |
|---|---|---|---|
| Note 1: Considering again IETF NEMO protocol(s) as an example, the address configurations may be equivalent to the specification of IP_CONFIG_METHODS, but now for all types of MNNs (i.e., LFN, LMN and VMN, refer to). Note 2: A new type 'IP_CONFIG_ INGRESS_INTERFACES_STATUS' may be defined similar to what is done for 'IP_CONFIG_METHODS'. This is not shown in the table (and the corresponding messages etc). | | | |

### Data type for MIH capabilities

| **Type Name** | **Derived From** | **Definition** | **Valid Range** |
|---|---|---|---|
| MIH_IS_QUERY_TYPE_LI ST | BITMAP (64) | A set of IS query types | Bit 0: BINARY Bit 1: RDF_DATA Bit 2: RDF_SCHEMA_URL |
| | | | Bit 3: RDF_SCHEMA |
| | | | Bit 4: TYPE_IE_NETWORK_TYPE |
| | | | Bit 5: TYPE_IE_OPERATOR_IDENTIFIER |
| | | | Bit 6: TYPE_IE_SERVICE_PROVIDER_IDE NTIFIER |
| | | | Bit 7: TYPE_IE_ACCESS_NETWORK_IDENT IFIER |
| | | | Bit 8: TYPE_IE_ROAMING_PARTNERS |
| | | | Bit 9: TYPE_IE_COST |
| | | | Bit 10: TYPE_IE_NETWORK_SECURITY Bit 11: TYPE_IE_NETWORK_QOS |
| | | | Bit 12: TYPE_IE_NETWORK_DATA_RATE |
| | | | Bit 13: TYPE_IE_NETWORK_IP_CONFIG_ME THODS |
| | | | Bit 14: TYPE_IE_NETWORK_CAPABILITIES |
| | | | Bit 15: TYPE_IE_LIST_SUPPORTED_LCP |
| | | | Bit 16: TYPE_IE_POA_MAC_ADDRESS |
| | | | Bit 17: TYPE_IE_POA_LOCATION |
| | | | Bit 18: TYPE_IE_POA_CHANNEL_RANGE |
| | | | Bit 19: TYPE_IE_POA_SYSTEM_INFORMATI ON |
| | | | Bit 20: TYPE_IE_POA_SUBNET_INFORMATI ON |
| | | | Bit 21: TYPE_IE_POA_IP_ADDRESS |
| | | | **Bit 22:** |
| | | | **TYPE_IE_NETWORK_IP_CONFIG_ME THODS_ INGRESS_INTERFACES** |
| | | | **Bit 23**- 63: (reserved) |
| | | | |

Type values for TLV encoding

### New TLV type (note 1):

| **TLV Type Name** | **TLV Type Value** | **Data Type** |
|---|---|---|
| IP Address Configuration Methods Ingress Interfaces | 64 | IP_CONFIG_METHODS_ INGRESS_INTERFACES - |

| | | |
|---|---|---|
| Note 1: TLV type 'Mobility Management Protocol' has the value 63, hence already extending the specified 62 values in IEEE 802.21. | | |

Thus, according to the present invention an MIH command including at least one parameter each including a data type having a plurality of bits is detected. Furthermore, a mobility data type defining mobility management protocols supported by a mobile node are determined. Finally, the plurality of bits of said determined data type are evaluated, wherein the mobile node is considered to constitute a root mobile router of a moving network, if the evaluated bits define at least one network mobility protocol, such as NEMO.

Moreover, the present invention refers to a method which detects an MIH command including at least one parameter each including a data type having a plurality of bits, wherein an IP configuration parameter defining IP configuration methods for a mobile node are determined. The further parameters of said detected MIH command are evaluated, wherein said determined IP configuration parameter defines IP configuration methods of egress interfaces for a root mobile router of a moving network if the evaluated parameters include an additional IP configuration ingress parameter, defining an IP configuration method of ingress interfaces of a connected moving network.

The advantages of such a potential implementation are as follows: inter-technology handover could be a "prepared" handover and a proposed extension to query signaling is part of such preparation that minimizes interruption time, decreases a handover failure ratio, and decreases a handover latency.

If the mobile network operator is modified according to the present invention the following benefits are gained: the (radio) network resources are controlled efficiently, handovers for moving networks are optimized pro-actively, i.e. basically independent of handover initiation and in advance. Furthermore, it is possible to place control logic, i.e. MIHF, in any network element, e.g. PCRF (policy changing rule function), independent of solutions providing by underlying mobility management protocols, e.g. NEMO uses MAPs like the home agent (HA) for enforcement. Finally, the present invention enables proper protocol handling.

The proposed solution is also independent of the underlying mobility protocol, hence, flexible and the mobility network operator's investment is saved.

Moreover, it is possible to add moving networks or personal area networks as "mobility enabled coverage extended areas" to e.g. 3GPP networks, which will enlarge the customer base for mobile network operator's service delivery and will pave the way to new, innovative services and applications.

Finally, the present invention supports a mobility for other types of mobility endpoints such as moving networks utilizing IETF protocols such as NEMO. Moreover, IEEE 802.21 may be used to optimize the mobility process of new types of mobility end points and may be used to enforce network control related to the mobility process.

Although embodiments of the present invention and their advantages have been described in detail, it should be understood that various changes, substitutions and alterations can be made herein without departing from the spirit and scope of the invention as defined by the appended claims. For example, it will be readily understood by those skilled in the art that many of the features, functions and processes described herein may be varied while remaining within the scope of the present invention. Moreover, the scope of the present application is not intended to be limited to the particular embodiments of the system, process, methods or steps presently existing or later to be developed that perform substantially the same function or achieve substantially the same result as the corresponding embodiments described herein may be utilized according to the present invention. Accordingly, the appended claims are intended to include within their scope such systems, processes, methods or steps.

### Reference List

- 1: moving network
- 2A, 2B: access network
- 3: core network
- 4: internet
- UE1 to UE3: user equipment
- rMR: root mobile router
- AP: access point
- AR: access router
- MA: mobility anchor
- HA: home agent
- DP: decision point
- CN: corresponding node
- IC1, IC2, IC10: internal communication steps
- EC1 to EC7, EC10 to EC13: external communication steps

## Claims

1. A method to enable media independent handover for moving networks, comprising the steps:
indicating (IC1) a request from an external user equipment (UE3) to a root mobile router (rMR) of a moving network (1) for joining said moving network (1);
decision making (EC1) in the mobile router (rMR) to accept said external user equipment (UE3) as a new member of said moving network (1);
sending a registration query (EC2) including an identification for the new member (UE3) from said root mobile router (rMR) to a decision point (DP) of a serving network; decision making (EC3) in said decision point (DP) to registrate said new member (UE3);
sending a decision result (EC4) for the new member (UE3) to said root mobile router (rMR); and
accepting or rejecting (IC2) said external user equipment (UE3) as new member of said moving network (1) on the basis of said decision result.

2. The method according to claim 1, further comprising the steps:
sending a registration verification (EC5) from said root mobile router (rMR) to said decision point (DP) indicating a successful incorporation of the new member (UE3) into the moving network (1);
performing a decision verification (EC6) in the decision point (DP); and
sending a result (EC7) of the decision verification to said root mobile router (rMR).

3. The method according to claim 1 or 2, further comprising the step:
removing said new member (UE3) from said moving network (1) in case it is rejected by the result of the decision making (EC3) or the decision verification (EC6).

4. The method according to any of claims 1 to 3, wherein said decision making (EC3) is based on network operator policies, network conditions, user equipment subscriptions, or a combination thereof.

5. The method according to any of claims 1 to 4, wherein said decision result (EC4) further includes the reason for the decision.

6. The method according to any of claims 1 to 5, wherein said accepting starts a NEMO-communication to add said external user equipment (UE3) to said moving network (1).

7. The method according to any of claims 2 to 6, wherein said decision verification (EC6) verifies registration execution of the new member (UE3) by the underlying mobility protocol.

8. A method to enable media independent handover for moving networks, comprising the steps:
decision making (EC10) in a decision point (DP) of a serving network to eliminate at least one user equipment from the moving network (1);
sending an elimination request (EC11) including identification of concerned user equipment from said decision point (DP) to a root mobile router (rMR) of said moving network (1);
removing (IC10) said at least one identified user equipment from said moving network (1); and
sending an elimination acknowledgement (EC12) from said root mobile router (rMR) to said decision point (DP) of the successful elimination.

9. The method according to claim 8, comprising the further step:
performing a decision verification (EC13) in said decision point (DP) verifying the elimination of said at least one user equipment.

10. The method according to claim 8 or 9, wherein said decision making (EC10) is based on network operator policies, network conditions, user equipment subscriptions, or a combination thereof.

11. The method according to any of claims 8 to 10, wherein said elimination request further includes the reason for the decision.

12. The method according to any of claims 8 to 11, wherein said removing starts a NEMO-communication to remove said at least one identified user equipment in said moving network (1).

13. The method according to any of claims 9 to 12, wherein said decision verification (EC13) further makes the elimination information available to said serving network.

14. The method according to any of claims 1 to 13, wherein it is implemented in a IEEE 802.21 protocol.

15. A media independent handover protocol comprising the further MIH commands
registration query message for initiating a registration of a joining user equipment (UE3) to a moving network (1); registration verification message for verifying said registration; and
elimination message for eliminating a user equipment from a moving network (1).

16. A system to enable media independent handover for moving networks comprising:
a decision point (DP) in a serving network; and
a root mobile router (rMR) in a moving network (1), wherein said root mobile router (rMR) realizes an internal communication in said moving network indicating a request from an external user equipment (UE3) to said root mobile router for joining said moving network (1);
said root mobile router (rMR) makes a decision to accept said external user equipment (UE3) as a new member of said moving network (1);
said root mobile router (rMR) sends a registration query including an identification for the new member to said decision point (DP);
said decision point (DP) makes a decision for the acceptance of the new member;
said decision point (DP) sends a decision result for the new member to said root mobile router (rMR); and
said root mobile router (rMR) accepts or rejects said external user equipment as new member of said moving network (1) on the basis of the decision result.

17. The system according to claim 16, wherein
said root mobile router (rMR) sends a registration verification indicating a successful incorporation of the new member into the moving network (1) to said decision point (DP) ;
said decision point (DP) performs a decision verification; and
said decision point (DP) sends a result of the decision verification to said root mobile router.

18. The system according to claim 16 or 17, wherein said root mobile router removes said new member (UE3) from said moving network (1) in case it is rejected by the result of the decision making or the decision verification.

19. The system according to any of claims 16 to 18, wherein the decision point (DP) makes the decision based on network operator policies, network conditions, user equipment subscriptions or a combination thereof.

20. The system according to any of claims 16 to 19, wherein said decision result further includes the reason for the decision.

21. The system according to any of claims 16 to 20, wherein said root mobile router (rMR) starts a NEMO-communication to add or remove said external user equipment to said moving network (1) for the accepting or the rejecting of said external user equipment.

22. The system according to any of claims 17 to 21, wherein said decision point (DP) verifies a registration execution of the new member (UE3) by the underlying mobility protocol for said decision verification.

23. The system according to any of claims 16 to 22, wherein said decision point (DP) makes a decision to eliminate at least one user equipment from a moving network (1);
said decision point (DP) sends an elimination request including identification of concerned user equipment to said root mobile router(rMR);
said root mobile router (rMR) removes said at least one identified user equipment from said moving network (1); and said root mobile router (rMR) sends an elimination acknowledgement to said decision point (DP) after successful elimination of the at least one identified user equipment.

24. The system according to claim 23, wherein said decision point (DP) performs a decision verification verifying the elimination of said at least one user equipment.

25. The system according to claim 23 or 24, wherein said decision point (DP) makes its decision based on network operator policies, network conditions, user equipment subscriptions or a combination thereof.

26. The system according to any of claims 23 to 25, wherein said elimination request further includes the reason for the decision.

27. The system according to any of claims 23 to 26, wherein said root mobile router (rMR) starts a NEMO-communication to remove said at least one identified user equipment from said moving network (1).

28. The system according to any of claims 24 to 27, wherein said decision point (DP) further makes the elimination information available to said serving network after said decision verification (EC13).

29. The system according to any of claims 23 to 28, wherein it is based on a IEEE 802.21 protocol.

30. A method to enable media independent handover for moving networks, comprising the steps:
detecting a media independent handover command including at least one parameter each including a data type having a plurality of bits;
determining a mobility data type defining mobility management protocols supported by a mobile node; and
evaluating the plurality of bits of said determined data type, wherein said mobile node is considered as root mobile router (rMR) of a moving network (1), if the evaluated bits define at least one network mobility protocol.

31. The method of claim 30, further comprising the step Performing a handover of said moving network (1) on the basis of the evaluated network mobility protocol.

32. The method according to claim 30 or 31, wherein it is implemented in a IEEE 802.21 protocol,
said media independent handover command constitutes a "MIH_Net_HO_CANDIDATE_QUERY.response/confirm" command, said parameter constitutes a "MobilityManagementSupported" parameter,
said data type constitutes an "IP_Mobility_MGMT" data type, and
at least one of the bits 7 to 15 of the data type define a "NEMO" protocol and/or "NEMO" protocol with extensions.

33. The method according to any of claims 30 to 32, wherein the handover is initiated by the serving network.

34. A method to enable media independent handover for moving networks, comprising the steps:
detecting a media independent handover command including at least on parameter each including a data type having a plurality of bits;
determining an IP configuration parameter defining IP configuration methods for a mobile node; and
evaluating the further parameters of said detected media independent handover command, wherein said determined IP configuration parameter defines IP configuration methods of egress interfaces for a root mobile router (rMR) of a moving network (1), if the evaluated parameters include an additional IP configuration ingress parameter defining an IP configuration method of ingress interfaces of a connected moving network.

35. The network according to claim 34, wherein it is implemented in a IEEE 802.21 protocol;
said MIH command constitute an "MIH_MN_HO_CANDIDATE_QUERY.response/confirm" command and/or
"MIH_N2N_HO_QUERY_RESOURCES.request/indication/response/confirm" command; and
said additional parameter constitutes an "IPConfigurationMethodIngressInterfaces" parameter.

36. The method according to claims 34 or 35, wherein the handover is initiated by the moving network.

37. A method to enable media independent handover for moving networks comprising a combination of the steps according to claim 30 and 34.

38. The method according to claim 37, wherein the handover is initiated by the serving network.

## Amended claims

### Amended claims in accordance with Rule 137(2) EPC.

**1.** A method to enable media independent handover for moving networks, comprising the steps:
detecting a media independent handover command including at least one parameter each including a data type having a plurality of bits;
determining a mobility data type defining mobility management protocols supported by a mobile node; and
evaluating the plurality of bits of said determined data type, wherein said mobile node is considered as root mobile router (rMR) of a moving network (1), if the evaluated bits define at least one network mobility protocol.

**2.** The method of claim 1, further comprising the step performing a handover of said moving network (1) on the basis of the evaluated network mobility protocol.

**3.** The method according to claim 1 or 2, wherein it is implemented in an IEEE 802.21 protocol,
said media independent handover command constitutes a "MIH_Net_HO_CANDIDATE_QUERY.response/confirm" command, said parameter constitutes a "MobilityManagementSupported" parameter;
said data type constitutes an "IP_Mobility_MGMT" data type, and
at least one of the bits 7 to 15 of the data type define a "NEMO" protocol and/or "NEMO" protocol with extensions according to RFC 3963.

**4.** The method according to any of claims 1 to 3, wherein the handover is initiated by the core network.

**5.** A method to enable media independent handover for moving networks, comprising the steps:
detecting a media independent handover command including at least on parameter each including a data type having a plurality of bits;
determining an IP configuration parameter defining IP configuration methods for a mobile node; and
evaluating the further parameters of said detected media independent handover command, wherein said determined IP configuration parameter defines IP configuration methods of egress interfaces for a root mobile router (rMR) of a moving network (1), if the evaluated parameters include an additional IP configuration ingress parameter defining an IP configuration method of ingress interfaces of a connected moving network.

**6.** The network according to claim 5, wherein it is implemented in a IEEE 802.21 protocol;
said MIH command constitute an "MIH_MN_HO_CANDIDATE_QUERY.response/confirm" command and/or "MIH_N2N_HO_QUERY_RESOURCES.request/indication/response/confirm" command; and
said additional parameter constitutes an "IPConfigurationMethodIngressInterfaces" parameter.

**7.** The method according to claims 5 or 6, wherein the handover is initiated by the moving network (1).

**8.** A method to enable media independent handover for moving networks comprising a combination of the steps according to claim 1 and 5.

**9.** The method according to claim 8, wherein the handover is initiated by the core network.
